## Europäisches Patentamt
## European Patent Office
## Office européen des brevets

(19)

(11) Veröffentlichungsnummer: **0 110 327**
**B1**

(12) # EUROPÄISCHE PATENTSCHRIFT

(45) Veröffentlichungstag der Patentschrift:
20.05.87

(51) Int. Cl.⁴: **A 46 B 13/02**

(21) Anmeldenummer: **83111755.1**

(22) Anmeldetag: **24.11.83**

(54) **Elektrisch angetriebene Zahnbürste.**

(30) Priorität: **30.11.82 DE 3244262**

(43) Veröffentlichungstag der Anmeldung:
**13.06.84 Patentblatt 84/24**

(45) Bekanntmachung des Hinweises auf die Patenterteilung:
**20.05.87 Patentblatt 87/21**

(84) Benannte Vertragsstaaten:
**AT BE CH DE FR GB IT LI LU NL SE**

(56) Entgegenhaltungen:
**EP-A-0 094 490
CH-A-459 142
DE-A-1 532 781
DE-A-1 532 804
DE-A-2 940 275
DE-A-2 944 391
US-A-3 524 088**

(73) Patentinhaber: **Blendax- Werke R. Schneider GmbH & Co., Rheinallee 88, D-6500 Mainz (DE)**

(72) Erfinder: **Klein, Horst, Schwarzwaldstrasse 6, D-6233 Kelkheim- Fischbach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft eine elektrisch angetriebene Zahnbürste mit oszillierender Schwingung, deren Schwingungswinkel unterschiedlich einstellbar ist.

Elektrisch angetriebene Zahnbürsten, die eine oszillierende Bewegung zur Zahnreinigung ausüben, sind bereits seit langem bekannt und werden erfolgreich zur Reinigung der Zähne angewandt. Die oszillierende Bewegung wird durch Umwandlung einer durch einen Elektromotor ausgeübten Rotationsbewegung mit Hilfe eines Bewegungswandlers erzielt. Hierbei erfolgt die Oszillationsbewegung in der Regel innerhalb einer konstanten Schwingungsamplitude, die mittels eines Wellenstumpfes auf eine auf diesen aufgesteckte Zahnbürste übertragen wird.

Es wurde bereits vorgeschlagen, elektrisch angetriebene Zahnbürsten mit einer oszillierenden Bewegung zu konstruieren, deren Schwingungsamplitude verstellbar ist, um diese auf die individuellen Verhältnisse des Zahnbürstenbenutzers einstellen zu können.

So ist aus der DE-AS-1 532 781 eine motorisch angetriebene Zahnbürste mit einem Kurbeltrieb zur Erzeugung von Schwingbewegungen an der Bürste bekannt, wobei die amplitude der Schwingbewegungen durch Verschiebung mindestens eine Angriffspunktes der miteinander in Eingriff stehenden Kurbeltriebelemente verstellbar ist.

Elektrische Zahnbürsten dieser Art werden aufgrund ihrer umständlichen Wirkungsweise und des aufwendigen Konstruktionsmechanismusses in der Praxis nicht verwendet.

Aus der DE-A-2 940 275 ist ebenfalls eine Zahnbürste mit elektrischem Antrieb bekannt, deren Stärke der Schwingbewegungen der Bürste verringerbar ist.

Diese Aufgabe wird konkret dadurch gelöst, daß bei dem elektromotorischen Antrieb der Bürste über eine Kurbelschleife die Verkleinerung der Amplitude der Schwingbewegungen durch eine Abstandsvergrößerung zwischen der Achse des Elektromotors und der Bürstenachse bzw. die Regulierung der Stärke der Schwingbewegungen durch die Einschaltung eines Widerstandes in den Stromkreis des elektrischen Antriebs erfolgt.

Eine solche Maßnahme bedingt ebenfalls die Mitverwendung weiterer konstruktiver Merkmale, durch die die Wirkungsweise der Bürste kompliziert wird.

Eine weitere Maßnahme zur Variation des Schwingungswinkels einer oszillierenden Elektrozahnbürste, die auch in die Praxis Eingang gefunden hat, beschreibt die DE-A-2 944 391:

Hier wird mittels eines Exzenterstiftes, der auf einem von einem Elektromotor angetriebenen drehbaren Träger befestigt ist, und mit einem an einem Innenteil des Zahnbürstenhalters vorgesehenen Längsschlitz, der sich im wesentlichen radial zur Längsachse des Instrumentenhalters erstreckt und in welchen der Exzenterstift frei verschiebbar eingreift, der Radialabstand zwischen der Drehachse des Trägers des Exzenterstiftes und dessen Eingreifstelle im Längsschlitz verändert, wodurch eine Verstellung des Schwingungswinkels erfolgen kann.

Diese gegenüber dem zuvor beschriebenen Stand der Technik zwar fortschrittliche Vorrichtung ist jedoch immer noch verhältnismäßig kompliziert aufgebaut und störungsanfällig.

Darüber hinaus ist durch diese Konstruktion, unter Einhaltung eines für den Gebrauch akzeptablen Maximaldurchmessers des Handstücks der Elektrozahnbürste, nur ein maximaler Amplitudenausschlag von ca. 30° erzielbar, während es wünschenswert erscheint, einen noch höheren Spielraum bei der Einstellung des Schwingungswinkels zu haben.

Erfindungsgemäß war daher die Aufgabe zu lösen, eine elektrische Zahnbürste zu konstruieren, deren Schwingungswinkel verstellt werden kann, die einfach konstruiert ist, ohne Störungsanfälligkeit arbeitet und die beschriebenen Nachteile der aus dem Stand der Technik bekannten, gattungsgleichen elektrischen Zahnbürsten nicht aufweist.

Die Lösung dieser Aufgabe besteht darin, daß die Laufrichtung des die Bewegung erzeugenden Elektromotors durch Polumschaltung geändert werden kann. Diese Änderung der Motorlaufrichtung bewirkt über eine mit einer kurvenartigen Öffnung versehene freilaufende Scheibe eine Änderung des Radius' der Umlaufbahn des Bolzens einer Schwinge, mit der die Achse des Ansatzstückes zur Aufnahme der Aufsteckbürste verbunden ist. Auf diese konstruktiv einfache Weise läßt sich der Winkelausschlag der Abtriebsschwinge verstellen, wodurch der Ausschlag der auf dem äußeren Ende des Ansatzstückes befindlichen Aufsteckbürste zwischen etwa 15 und etwa 55, vorzugsweise etwa 20 und 50°, variiert werden kann.

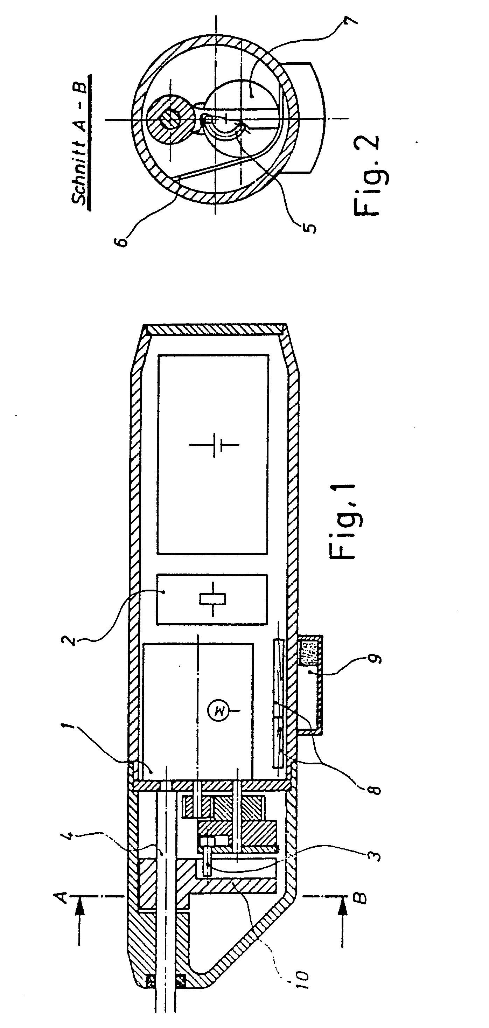

Die vorliegende Erfindung wird durch die Figuren 1 und 2 näher erläutert:

Dabei zeigt die Figur 1 einen schematischen Schnitt durch das Handstück eines erfindungsgemäß ausgestalteten Antriebs für eine Elektrozahnbürste.

Figur 2 gibt einen Schnitt entsprechend der Line A-B aus Figur 1 wieder.

Gemäß Figur 1 befindet sich in einem in seinen Umrissen teilweise angedeuteten Zahnbürstengehäuse als Antriebsquelle ein Elektromotor (1), der direkt durch das elektrische Netz, einen Trafo oder eine Batterie bzw. einen Akkumulator gespeist werden kann. Die Laufrichtung dieses Elektromotors kann mittels Polumschaltung durch ein Relais (2), beispielsweise über zwei Reed-Kontakte (8) in Verbindung mit einre zweistufigen Magnetschieber (9), umgekehrt werden. Dadurch erfährt der Radius der Umlaufbahn des Bolzens (3) einer Schwinge (10), die mit dem Ansatzstück (4) zur Aufnahme der Aufsteckbürste verbunden ist, eine Größenänderung, bedingt durch die Anordnung in einer kurvenförmigen, vorzugsweise ausgefrästen Öffnung (5) in einer, vorzugsweise durch eine Feder (6) gedämpften, freilaufenden Scheibe (7), wodurch eine Verschiebung des Winkelausschlags der Schwinge (10), der auf die Aufsteckbürste übertragen wird, erzeugt werden kann.

Auf diese Weise ist es mittels einer einfachen Konstruktion möglich, Winkelausschläge der Zahnbürste zwischen etwa 15 und etwa 55°, vorzugsweise etwa 20 bis etwa 50°, zu erzeugen.

**Patentansprüche**

Elektrisch angetriebene Zahnbürste mit oszillierender Schwingung, deren Schwingungswinkel unterschiedlich einstellbar ist, daurch gekennzeichnet, daß die Laufrichtung des die Bewegung erzeugenden Elektromotors (1) durch Polumschaltung geändert werden kann und hierdurch der Radius der Umlaufbahn des Bolzens (3) einer mit dem Ansatzstück (4) zur Aufnahme der Aufsteckbürste verbundenen Schwinge (10) in einer kurvenförmigen Öffnung (5) einer freilaufenden Scheibe (7) eine Größenänderung erfährt, wodurch eine Verschiebung des Winkelausschlags der Schwinge (10) erzeugt wird.

2. Elektrische Zahnbürste nach Anspruch 1, dadurch gekennzeichnet, daß die Polumschaltung des Elektromotors (1) durch ein Relais (2) erfolgt.

3. Elektrische Zahnbürste nach Anspruch 2, dadurch gekennzeichnet, daß die Polumschaltung über Reed-Kontakte (8) in Verbindung mit einem zweistufigen Magnetschieber (9) erfolgt.

4. Elektrische Zahnbürste nach Anspruch 1, dadurch gekennzeichnet, daß die mit einer kurvenformigen Öffnung (5) versehene freilaufende Scheibe (7) mittels einer Feder (6) gedämpft ist.

**Claims**

1. Electrically operated toothbrush producing an oscillatory motion, whereby the amplitude of oscillation may be adjusted, comprising an electric motor (1) with a rotary motion, a rotating shaft connected to the axis of a holder (4) taking up a slip-on toothbrush, said rotating shaft having a bolt (3) at its outer end, said bolt being fixed in a curve-like opening (5) of a free running disc (7), the radius of the circular orbit of said bolt being varied by reversal of the rotating motion of said electric motor caused by commutation causing a variation of the angular deflection (10) of said shaft.

2. Electrical toothbrush according to claim 1, characterized by the fact that the pole commutation of the electric motor (1) is effected by a relay (2).

3. Electrical toothbrush according to claim 2, characterized by the fact that the pole commutation is effected by Reed contacts (8) in combination with a two-phase magnetic cursor (9).

4. Electrical toothbrush according to claim 1, characterized by the fact that the free disc (7) provided with a curve-like opening (5) is cushioned by a spring (6).

**Revendications**

1. Brosse à dents électrique à mouvements oscillatoires, dont l'angle d'oscillations est réglable, caractérisée par le fait que le sens de marche du moteur électrique (1) produisant le mouvement peut être modifié par commutation des connexions polaires et par ceci la grandeur du rayon du chemin de rotation du tourillon (3) d'une coulisse (10) jointe à l'allonge (4) qui porte la tige-brosse dans une ouverture sinueuse (5) d'un disque à roue libre (7) est changée produisant un décalage de la déviation de l'angle de la coulisse (10).

2. Brosse à dents électrique selon revendication 1, caractérisée par le fait que la commutation des connexions polaires du moteur électrique (1) s'effectue par un relais (2).

3. Brosse à dents électrique selon revendication 2, caractérisée par le fait que la commutation des connexions polaires s'effectue par les contacts Reed (8) conjointement avec une barre magnétique à deux seuils (9).

4. Brosse à dents électrique selon revendication 1, caractérisée par le fait que le disque à roue libre (7) ayant une ouverture sinueuse (5) est amorti par un ressort (6).

Fig. 1

Schnitt A - B

Fig. 2

0 110 327